# EUROPÄISCHE PATENTSCHRIFT

(11) **EP 4 124 483 B1**
(45) Veröffentlichungstag und Bekanntmachung des Hinweises auf die Patenterteilung: **27.05.2026**
(21) Anmeldenummer: 22185915.0
(22) Anmeldetag: 20.07.2022
(51) Int. Cl.: B60H 1/32, F04B 39/00, F04B 39/12, F04B 35/04

(54) **HALTERUNG ZUM FIXIEREN EINES ELEKTRISCHEN KOMPRESSORS**
MOUNTING FOR FIXING AN ELECTRIC COMPRESSOR
SUPPORT PERMETTANT DE FIXER UN COMPRESSEUR ÉLECTRIQUE

(30) Priorität: 29.07.2021 DE 102021119801
(43) Veröffentlichungstag der Anmeldung: 01.02.2023
(73) Patentinhaber: Vibracoustic SE, 69469 Weinheim (DE)
(72) Erfinder: Myklebust, Erik, 3610 Kongsberg (NO); Müller, Niklas, 79241 Ihringen (DE)
(74) Vertreter: Patentanwälte Olbricht Buchhold Keulertz

(56) Entgegenhaltungen:
- EP-A1- 2 423 015
- EP-A1- 2 505 394
- EP-A1- 3 730 789
- WO-A1-2020/001872
- CN-A- 111 927 740
- DE-A1- 102012 111 967
- DE-A1- 102019 131 835

## Beschreibung

Die Erfindung betrifft eine Halterung zum Fixieren eines elektrischen Kompressors in einem Fahrzeug gemäß Anspruch 1.

In vielen modernen Fahrzeugen, wie zum Beispiel in Hybrid- und Elektroautos, sorgen die dort verbauten Klimasysteme nicht für die Kühlung des Innenraums sondern auch für die Kühlung der Batterie. Diese Klimasysteme sind wiederum auf elektrische Kompressoren angewiesen, welche Luft oder Kältemittel ansaugen, komprimieren und anschließend wieder auslassen. Üblicherweise werden derartige Kompressoren im vorderen Fahrzeugbereich verbaut. Dabei werden sie meistens mittels kraftschlüssiger Verbindung entweder direkt am Verbrennungsmotor bzw. an der elektrischen Antriebseinheit (EDU) befestigt, oder sie werden an einer dafür vorgesehenen und mit dem Fahrgestell verbundenen Trägerstruktur oder Aufhängung montiert. Dabei werden alle tragenden Strukturen des Fahrzeugs im Sinne dieser Offenbarung als Aufhängung bezeichnet, sofern aus dem jeweils konkreten Kontext nichts anderes hervorgeht. Unter einer Aufhängung ist also jede Struktur zu verstehen, die eine kraftschlüssige Befestigung eines Kompressors an dem Fahrgestell bzw. an dem Chassis des Fahrzeugs ermöglicht, also beispielsweise eine im Motorraum verbaute Montagestange oder der Motor selbst.

Elektrische Kompressoren erzeugen im aktiven Zustand Vibrationen oder Schwingungen, welche vor allem in axialer Richtung sowie in einer senkrecht zur Längsachse des Kompressors verlaufenden radialen Richtung abgegeben werden. Über die kraftschlüssige Verbindung des Kompressors mit dem Fahrzeugchassis können diese Vibrationen in andere Bereiche des Fahrzeugs übertragen werden, z.B in den Fahrgastraum. Dort können die Vibrationen und Schwingungen vom Fahrer wahrgenommen und als störend empfunden werden. Neben den Schwingungen können die Kompressoren im Betriebszustand auch einen Geräuschpegel erreichen, der zu einer erhöhten Lautstärke des gesamten Fahrzeugs führt, insbesondere des Innere des Fahrgastraums. Dasselbe gilt analog für andere Kraftfahrzeugteile, deren Eigenvibrationen und Lautstärke zu Störungen des Komforts im Fahrgastraum führen können.

Im Stand der Technik kann als Lösung beispielsweise vorgesehen sein, den Kompressor zumindest teilweise in einem Gehäuse aufzunehmen, welches als Schallschutz dienen soll. Dabei weisen die gängigen Gehäuse meist eine harte Außenhülle auf, welche an ihrer Innenseite - also an ihrer zum Kompressor hin zeigende Seite - ein schallabsorbierendes Material aufweisen.

Nachteilhaft an derartigen Gehäusen ist jedoch, dass sie eine Übertragung der Vibrationen des elektrischen Kompressors auf das Fahrgestell und somit auch in den Fahrgastraum nicht ausreichend unterbinden können, weil sie lediglich einen akustischen Schutz vorsehen.

Dokument DE102019131835A1zeigt eine beispielhafte Halterung eines Kompressors in einem Fahrzeug.

Aufgabe der Erfindung ist es daher, eine Halterung zu schaffen, welche die genannten Probleme des Standes der Technik überwindet und welche neben einer Absorption der Akustik insbesondere eine Absorption der Schwingungen oder Vibrationen eines in einem Fahrzeug verbauten elektrischen Kompressors oder eines vergleichbaren Bauteils ermöglicht.

Die Merkmale der Erfindung sind in Anspruch 1 angegeben. Ausgestaltungen sind Gegenstand der Ansprüche 2 bis 13.

Erfindungsgemäß wird die Aufgabe durch eine Halterung zum Fixieren eines elektrischen Kompressors in einem Fahrzeug gelöst, wobei die Halterung ein Gehäuse mit einer Aufnahme umfasst, wobei das Gehäuse dazu ausgebildet ist, den elektrischen Kompressor in der Aufnahme aufzunehmen. Das erfindungsgemäße Gehäuse weist außerdem ein Fixiermittel zur Fixierung oder zur Montage des elektrischen Kompressors an einer Aufhängung des Fahrzeugs auf. Schließlich umfasst die Halterung einen Dämpfungsmechanismus.

Mit einer derartig ausgestalteten Halterung ist es möglich, den elektrischen Kompressor (oder ein vergleichbares Bauteil) so aufzunehmen und zu halten, tragen oder fixieren, dass eine andernfalls notwendige kraftschlüssige Direktverbindung des Kompressors mit dem Fahrzeug - etwa über Schraub-, Klemm- oder Nietverbindungen - entfallen kann. Hierdurch kann verhindert werden, dass die durch den elektrischen Kompressor erzeugten Vibrationen auf direktem Weg auf das Chassis des Fahrzeugs übertragen werden, weil der dafür benötigte direkte Kraftpfad zwischen Kompressor und Aufhängung fehlt. Um den Kompressor dennoch im Auto zu befestigen, weist das Gehäuse Fixiermittel zu seiner Fixierung an der Aufhängung Fahrzeugs auf. Somit wird der elektrische Kompressor nicht, wie gewohnt, direkt mit dem Fahrgestell, dem Motor oder einer vergleichbaren tragenden Struktur des Fahrzeugs verbunden und anschließend zur Schallabsorption von einem Gehäuse umgeben. Stattdessen wird der Kompressor vollständig von der Halterung getragen bzw. gehalten und erst durch die Befestigung der Halterung an der Aufhängung über die Fixiermittel (sozusagen indirekt) mit den anderen Strukturen des Fahrzeugs verbunden.

Gleichzeitig sorgt der mindestens eine Dämpfungsmechanismus der Halterung für eine Vibrations- und/oder Schallabsorption. Die Halterung kann beispielsweise einen ersten Dämpfungsmechanismus und einen zweiten Dämpfungsmechanismus aufweisen, wobei der erste Dämpfungsmechanismus insbesondere Schall absorbiert und wobei der zweite Dämpfungsmechanismus insbesondere einer Übertragung von Vibrationen des Kompressors auf das Fahrgestell entgegenwirkt. So kann zum Beispiel vorgesehen sein, dass der erste Dämpfungsmechanismus eine schallabsorbierende Verkleidung des Aufnahme des Gehäuses umfasst und dass der zweite Dämpfungsmechanismus ein oder mehrere Dämpfungsmittel umfasst, die zwischen dem Gehäuse und der Aufhängung des Fahrzeuggestells angeordnet sind und so die Übertragung der Eigenvibrationen des Kompressors auf das Fahrgestell unterbinden.

Das Fixiermittel zur Fixierung oder Montage der Halterung an der vorgesehenen Aufhängung des Fahrzeugs kann z.B. ein Klemm-, Niet- oder Schraubmechanismus sein. Denkbar ist auch, dass sich das Fixiermittel eine Bohrung oder eine Ausnehmung im Gehäuse der Halterung umfasst, welche mit einer weiteren Bohrung oder Öffnung in der Aufhängung in Deckung gebracht werden kann, wobei die Halterung anschließend mittels eines Bolzens oder einer Schraube an der Aufhängung fixiert werden kann.

Somit erlaubt die erfindungsgemäße Halterung neben einer Schallabsorption auch eine Absorption der Vibrationen oder Schwingungen des Kompressors. Im Ergebnis wird dadurch der Fahrkomfort für die Fahrer erhöht.

Es kann außerdem vorgesehen sein, dass der Dämpfungsmechanismus zur akustischen Dämpfung des elektrischen Kompressors und/oder zur Dämpfung der Vibration des elektrischen Kompressors und/oder zur Dämpfung des Kraftpads des elektrischen Kompressors zur Aufhängung des Fahrzeugs ausgebildet ist. Auf diese Weise kann gewährleistet werden, dass sowohl die im Fahrgastraum ankommenden Geräusche des Kompressors als auch die im Fahrgastraum ankommenden Vibrationen des Kompressors auf ein Minimum reduziert werden. Das ist gegenüber den bekannten Lösungen von Vorteil, weil die dort verwendeten Kompressorgehäuse zwar als Schallschutz verwendet werden können, nicht jedoch als Vibrationsschutz, da dort stets vorgesehen ist, dass der elektrische Kompressor selbst kraftschlüssig mit dem tragenden Strukturen des Fahrzeugs verbunden wird.

Es ist erfindungsgemäß vorgesehen, dass der Dämpfungsmechanismus mindestens ein internes Dämpfungsmittel und/oder mindestens ein externes Dämpfungsmittel umfasst. Dabei kann insbesondere vorgesehen sein, dass das interne Dämpfungsmittel zumindest abschnittsweise an einer Innenseite des Gehäuses in der Aufnahme angeordnet ist, wobei das interne Dämpfungsmittel insbesondere eine Verkleidung der Innenseite sein kann. Eine Verkleidung an der Innenseite des Gehäuses hat den Vorteil, dass die Halterung den Kompressor schall- und vibrationsabsorbierend aufnehmen und halten kann. Dabei kann das als Verkleidung der Aufnahme ausgebildete interne Dämpfungsmittel zum Beispiel ein Polyurethan(PU)-Schaum sein, der auf vollständig oder teilweise an der Innenseite des Gehäuses aufgebracht ist. Anstelle oder zusätzlich zu einem PU-Schaum kann als internes Dämpfungsmittel auch aus Elastomer hergestelltes Polster oder "Pad" vorgesehen sein. Vor allem die internen Dämpfungsmittel, aber auch die externen Dämpfungsmittel, können stoffschlüssig mit dem Gehäuse verbunden sein, etwa über einen geeigneten Klebstoff. Darüber hinaus kann vorgesehen sein dass, das Gehäuse der Halterung den Kompressor im Wesentlichen formschlüssig umfasst, sodass der Kompressor in der Aufnahme kein oder nur sehr wenig "Spiel" hat.

Nach einer Weiterbildung der Halterung ist bevorzugterweise vorgesehen, dass das externe Dämpfungsmittel an einer Außenseite der Aufnahme des Gehäuses angeordnet ist, wobei das externe Dämpfungsmittel bei bestimmungsgemäßem Gebrauch der Halterung zwischen dem Gehäuse und der Aufhängung des Fahrzeugs angeordnet ist, wobei das externe Dämpfungsmittel bei bestimmungsgemäßem Gebrauch der Halterung insbesondere zwischen dem Fixiermittel und der Aufhängung des Fahrzeugs angeordnet ist. Dabei wird als bestimmungsgemäßer Gebrauch der Halterung der Zustand der Halterung verstanden, in dem sie in einem Fahrzeug zum Zwecke der Aufnahme eines elektrischen Kompressors verbaut ist. Ein externes Dämpfungsmittel kann beispielsweise ein elastomeres Ringelement oder ein vergleichbarer Elastomerkörper sein. Auf diese Weise werden Vibrationen, die gegebenenfalls trotz interner Dämpfungsmittel von dem Kompressor auf das Gehäuse übertragen werden, zusätzlich absorbiert, weil der direkte Kraftpfad vom Gehäuse auf das Fahrgestell durch das externe Dämpfungsmittel unterbrochen wird.

Darüber hinaus ist erfindungsgemäß vorgesehen, dass das Dämpfungsmittel ein absorbierendes Material umfasst, wobei das absorbierende Material insbesondere schallabsorbierend und/oder kraftabsorbierend und/oder vibrationsabsorbierend ist. Erfindungsgemäß ist das mindestens eine absorbierende Material ein Elastomer, ein textiler Stoff, ein Schaum oder eine Mischung der vorgenannten Materialien. Gemäß einer Weiterbildung der erfindungsgemäßen Halterung kann außerdem vorgesehen sein, dass das Elastomer ein Gummi ist. Es ist insbesondere denkbar, dass der textile Stoff ein Vliesstoff ist. Es ist ferner denkbar, dass der Schaum ein Polyurethan-Schaum (= PU-Schaum) ist. Vorzugsweise kann vorgesehen sein, dass die Halterung mindestens ein internes Dämpfungsmittel aufweist, das aus einem insbesondere schallabsorbierenden Material hergestellt ist (z.B. Vliesstoff oder PU-Schaum) und dass die Halterung gleichzeitig mindestens ein externes Dämpfungsmittel aufweist, das aus einem insbesondere vibrationsabsorbierenden Material hergestellt ist (z.B. Elastomer, speziell Gummi).

Erfindungsgemäß ist vorgesehen, dass das Gehäuse aus einem Kunststoff hergestellt ist. Dabei ist das Gehäuse insbesondere aus einem faserverstärkten Kunststoff hergestellt, um die die Kräfte auszuhalten, die durch das Aufnehmen und Halten des elektrischen Kompressors auf die Halterung wirken. Gleichzeitig weist das aus einem Kunststoffmaterial hergestellte Gehäuse ein niedriges Gewicht auf.

Es kann insbesondere vorgesehen sein, dass die Halterung derart ausgestaltet ist, dass der elektrische Kompressor ausschließlich über die Halterung an der Aufhängung des Fahrzeugs fixierbar ist. Diese Ausführung ist bevorzugt und hat den Vorteil, dass ein direkter Kraftpfad vom Kompressor auf die Aufhängung des Fahrzeugs vermieden werden kann. Stattdessen ist es mit der erfindungsgemäßen Halterung möglich, den Kompressor allein in der Aufnahme des Gehäuses aufzunehmen und dort zu halten bzw. zu tragen - eine zusätzliche kraftschlüssige Verbindung des Kompressors an der Aufhängung, wie bisher üblich, ist nicht mehr nötig. Auf diese Weise lassen sich die störenden Schwingungen des Kompressors vom Fahrgastraum entkoppeln, was eine Verbesserung des Fahrkomforts zur Folge hat. Der Grad der Entkopplung der Schwingung wird insbesondere dadurch verstärkt, dass das Gehäuse über ein externes Dämpfungsmittel mit der Aufhängung verbunden ist.

Vorteilhafterweise kann gemäß einer Ausführungsform vorgesehen, dass das Gehäuse den elektrischen Kompressor zumindest teilweise umschließt oder ummantelt, wenn der elektrische Kompressor in der Aufnahme des Gehäuses aufgenommen ist. Gemäß einer Weiterbildung der erfindungsgemäßen Halterung kann vorgesehen sein, dass das Gehäuse den elektrischen Kompressor derart umschließt, dass das Gehäuse im Wesentlichem mindestens 60 % einer Oberfläche des elektrischen Kompressors verdeckt, wenn der elektrische Kompressor in der Aufnahme des Gehäuses aufgenommen ist. Auf diese Weise kann das Gehäuse der Halterung selbst als strukturelles Bauteil wirken, welches den elektrischen Kompressor stabil und zuverlässig mit dem Fahrzeug verbindet. Gleichzeitig sorgt ein größtmögliches Umschließen des Kompressors durch dem Gehäuse für eine maximale Schallabsorption. Bevorzugterweise bleibt lediglich ein Abschnitt des Kompressors "frei", d.h. nicht vom Gehäuse der Halterung ummantelt, an dem Anschlüsse zu anderen mechanischen oder elektrischen Fahrzeugteilen angeordnet sind (wie bspw. Ein-/Ausgänge für Kabel, Schläuche o.ä.).

Es ist ferner denkbar, dass das Gehäuse mindestens zwei Gehäusesegmente umfasst. Idealerweise ist vorgesehen, dass das Gehäuse genau zwei Gehäusesegmente umfasst. Auf diese Weise kann mit möglichst wenig Bauteilen eine möglichst große Ummantelung des elektrischen Kompressors erreicht werden. So kann insbesondere eine Weiterbildung vorgesehen sein, bei der das Gehäuse ein erstes Gehäusesegment und ein zweites Gehäusesegment umfasst, wobei das erste Gehäusesegment und das zweite Gehäusesegment vorzugsweise derart miteinander verbunden sind, dass sie die Aufnahme des Gehäuses ausbilden. Denkbar ist z.B., dass die beiden Gehäusesegment an einem Abschnitt schwenk- oder klappbar miteinander verbunden sind. Dadurch das Gehäuse besonders leicht am Kompressor angeordnet werden. Eine anschließende vollständige Verbindung der Gehäusesegmente kann bspw. stoffschlüssig mit einem Klebstoff oder kraftschlüssig über einen Klemm- oder Schraubmechanismus erfolgen.

Weitere Merkmale, Einzelheiten und Vorteile der Erfindung ergeben sich aus dem Wortlaut der Ansprüche sowie aus der folgenden Beschreibung von Ausführungsbeispielen anhand der Zeichnungen. Es zeigen:
- Fig. 1: eine perspektivische Ansicht einer Halterung gemäß einer bevorzugten Ausführungsform in bestimmungsgemäßem Gebrauch;
- Fig. 2a: eine perspektivische Ansicht einer Halterung gemäß einer bevorzugten Ausführungsform;
- Fig. 2b: eine Seitenansicht der Halterung gemäß Fig. 2a;
- Fig. 2c: eine Frontansicht der Halterung gemäß Fig. 2a;
- Fig. 2d: eine Ansicht auf die Unterseite der Halterung gemäß Fig. 2a;
- Fig. 2e: eine Ansicht auf die Oberseite der Halterung gemäß Fig. 2a;
- Fig. 3: eine perspektivische Ansicht eines ersten Gehäusesegments einer Halterung gemäß einer bevorzugten Ausführungsform;
- Fig. 4: eine perspektivische Ansicht eines zweiten Gehäusesegments einer Halterung gemäß einer bevorzugten Ausführungsform.

In den Figuren sind gleiche oder einander entsprechende Elemente jeweils mit den gleichen Bezugszeichen bezeichnet und werden daher, sofern nicht zweckmäßig, nicht erneut beschrieben. Bereits beschriebene Merkmale werden zur Vermeidung von Wiederholungen nicht erneut beschrieben und sind auf alle Elemente mit gleichen oder einander entsprechenden Bezugszeichen anwendbar, sofern nicht explizit ausgeschlossen. Die in der gesamten Beschreibung enthaltenen Offenbarungen sind sinngemäß auf gleiche Teile mit gleichen Bezugszeichen bzw. gleichen Bauteilbezeichnungen übertragbar. Auch sind die in der Beschreibung gewählten Lageangaben, wie z. B. oben, unten, seitlich usw. auf die unmittelbar beschriebene sowie dargestellte Figur bezogen und sind bei einer Lageänderung sinngemäß auf die neue Lage zu übertragen. Weiterhin können auch Einzelmerkmale oder Merkmalskombinationen aus den gezeigten und beschriebenen unterschiedlichen Ausführungsbeispielen für sich eigenständige, erfinderische oder erfindungsgemäße Lösungen darstellen.

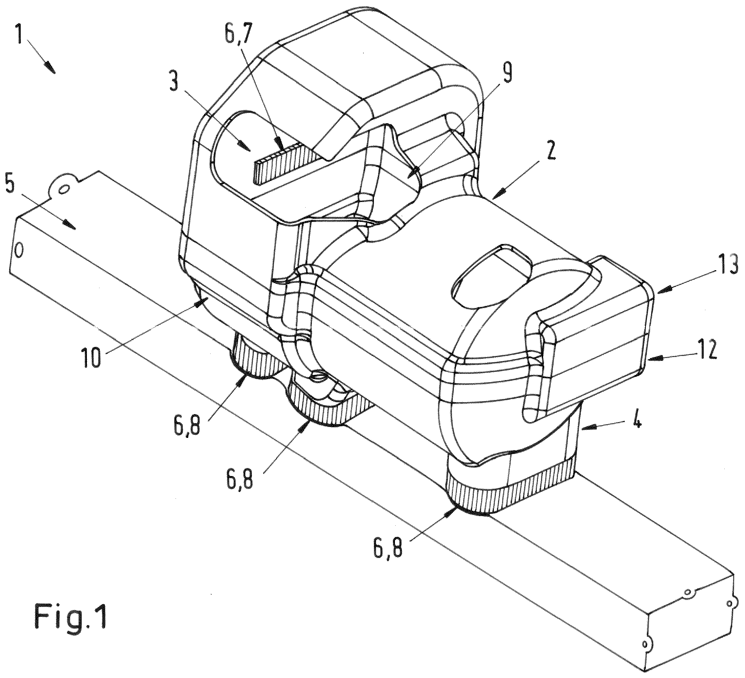

Die Fig. 1 zeigt in perspektivischer Ansicht eine Halterung 1 gemäß einer bevorzugten Ausführungsform, wobei sich die Halterung 1 gemäß Fig. 1 in ihrem bestimmungsgemäßen Gebrauch befindet, d.h. die Halterung 1 ist in einem Fahrzeug zum Zwecke der Aufnahme eines elektrischen Kompressors verbaut. Zur Befestigung der Halterung 1 im Fahrzeug ist die Halterung 1 vorzugsweise an einer Aufhängung 5 fixiert bzw. befestigt. Wie in Fig. 1 beispielhaft gezeigt, kann die Aufhängung eine Montagestange sein, die im Motorraum des Fahrzeugs verbaut ist. Denkbar ist aber auch eine Fixierung der Halterung 1 direkt am Motor bzw. an der der elektrischen Antriebseinheit (EDU) des Fahrzeugs.

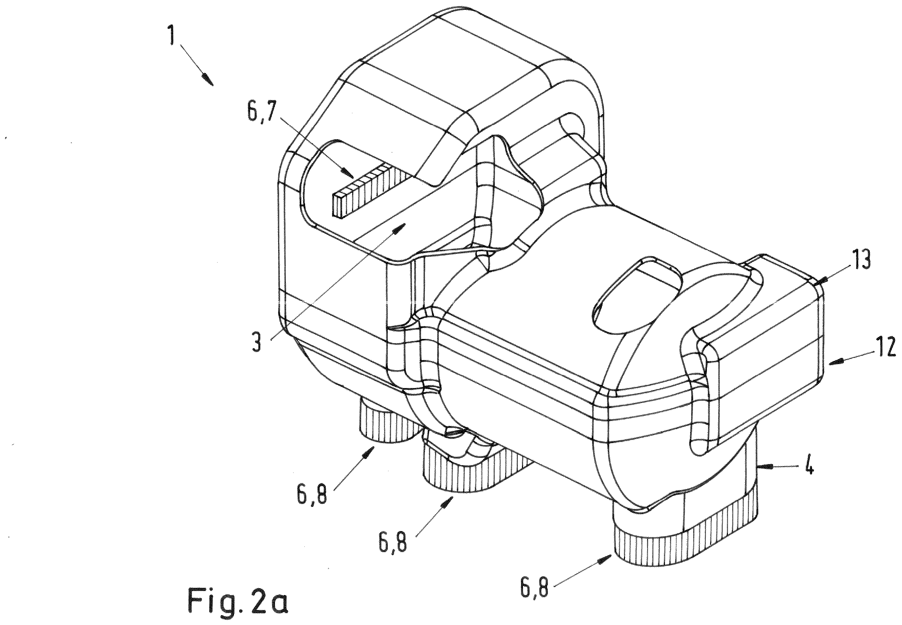

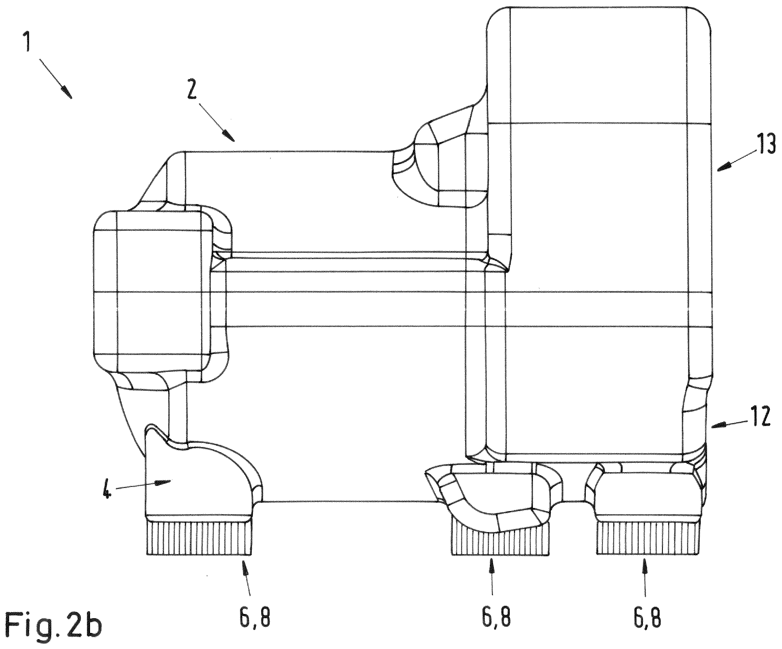

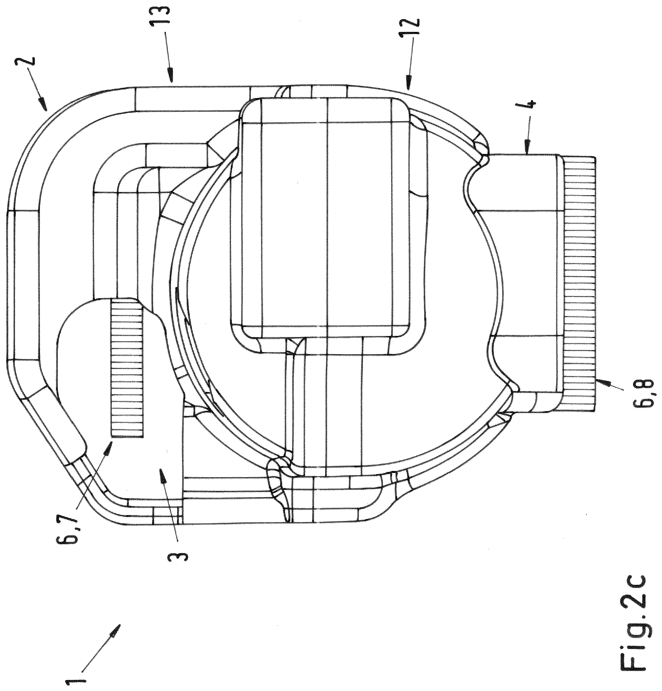

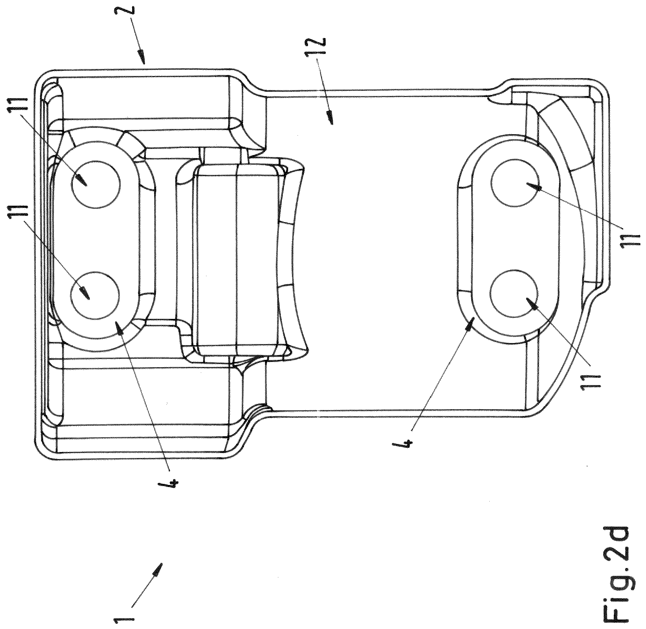

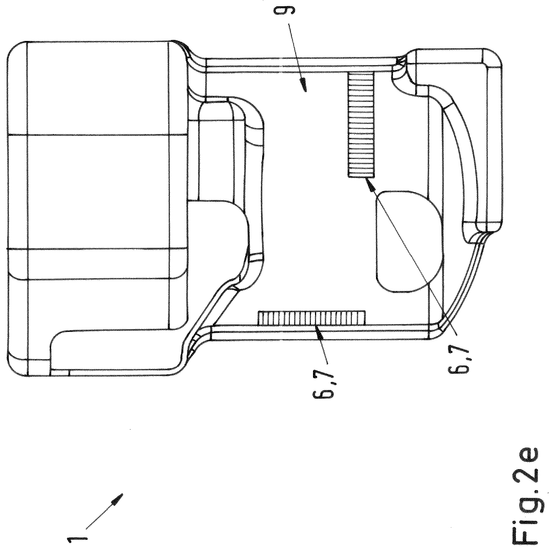

Die in Fig. 2a-e gezeigte Halterung 1 unterscheidet sich von der Halterung 1 gemäß Fig. 1 lediglich darin, dass die Halterung 1 in den Fig. 2a-e nicht an einer Aufhängung 5 befestigt ist.

Die Halterung aus Fig. 1 und Fig. 2a-e umfasst ein Gehäuse 2 mit einer in einer Aufnahme 3. Das Gehäuse 2 ist dazu ausgebildet, einen elektrischen Kompressor oder ein vergleichbares Fahrzeugteil in der durch das Gehäuse 2 ausgebildeten Aufnahme 5 aufzunehmen. Gleichzeitig weist das Gehäuse 2 Fixiermittel 4 zur Fixierung oder Montage der Halterung 1 an der Aufhängung 5 des Fahrzeugs auf. Das Fixiermittel 4 kann dabei insbesondere ein Schraub- oder Bolzensystem sein, das Ausnehmungen im Gehäuse 2 der Halterung 1 sowie Schrauben oder Bolzen (nicht gezeigt) umfasst, wobei die Schrauben oder Bolzen durch die Ausnehmungen **11** des Gehäuses 2 der Halterung 1 geführt und in entsprechende Öffnungen in der Aufhängung 5 geschraubt oder eingesetzt werden können. Das Fixiermittel 4 sorgt somit dafür, dass die Halterung 2 stabil, sicher und zuverlässig an der Aufhängung 3 fixiert und somit im Fahrzeug verbaut werden kann. Auf diese Weise wird der elektrische Kompressor nicht wie gewohnt direkt mit dem Fahrgestell oder dem Motor des Fahrzeugs verbunden und anschließend zur Schallabsorption von einem Gehäuse 2 umgeben, sondern er wird vollständig von der Halterung 1 aufgenommen bzw. gehalten und ist somit erst durch die Befestigung der Halterung 1 an der Aufhängung 3 über die Fixiermittel 4 der Halterung 1 indirekt mit den anderen Strukturen des Fahrzeugs verbunden.

Wird nun also der elektrische Kompressor von der Halterung 1 gehalten, so ist der Kompressor seinerseits sicher im Fahrzeug verbaut. Dabei wird eine direkte Übertragung von Schwingungen oder Vibrationen vom Kompressor auf die Grundstruktur des Fahrzeugs vermieden, weil kein direkter Kraftpfad zwischen Kompressor und Aufhängung 5 des Fahrzeugs zustande kommt.

Um das Maß der Übertragung von Schwingungen vom Kompressor auf die tragenden Strukturen des Fahrzeugs zusätzlich zu minimieren, kann die Halterung 1 einen Dämpfungsmechanismus 6 umfassen. Wie in Fig. 1 und Fig. 2a-e gezeigt, kann dieser Mechanismus 6 verschiedene Dämpfungsmittel 7,8 umfassen. Der Dämpfungsmechanismus 6 der Halterung 1 sorgt auf einfache Art und Weise für eine Vibrationsabsorption. Darüber eignet sich die gezeigte Halterung 1 auch zur Absorption von Schall, d.h. von Geräuschen, die der Kompressor im Betriebszustand abgibt. Dazu kann die Halterung 1 beispielsweise ein erstes Dämpfungsmittel 7 und zweites Dämpfungsmittel 8 aufweisen, wobei das erste Dämpfungsmittel 7 insbesondere Schall absorbiert und wobei das zweite Dämpfungsmittel 8 insbesondere einer Übertragung von Vibrationen des Kompressors auf das des Fahrgestell dämpfend entgegenwirkt. Anders als in Fig. 1 und Fig. 2a-e gezeigt, kann das erste Dämpfungsmittel 7 zum Beispiel auch eine schallabsorbierende Vollverkleidung der Innenseite 9 der Aufnahme3 des Gehäuses 2 umfassen, wobei die Verkleidung insbesondere ein PU-Schaum sein kann.

Wie in Fig. 1 und in Fig. 2a-e gezeigt, ist das erste Dämpfungsmittel 7 ein internes Dämpfungsmittel 7. Das interne Dämpfungsmittel 7 ist gemäß den Figuren zumindest abschnittsweise an einer Innenseite 9 des Gehäuses 2 in der Aufnahme 3 angeordnet, wobei vorliegend das interne Dämpfungsmittel 7 als Polster oder "Pad" ausgebildet ist, das ein Elastomermaterial umfasst. Das interne Dämpfungsmittel 7 ist stoffschlüssig, bspw. mittels eines Klebstoffs, an der Innenseite 9 des Gehäuses 2 angebracht. Das externe Dämpfungsmittel 8 ist an einer Außenseite 10 der Aufnahme 3 des Gehäuses 2 angeordnet. Dabei ist das externe Dämpfungsmittel 8 bei bestimmungsgemäßem Gebrauch der Halterung 1 zwischen dem Gehäuse 2 und der Aufhängung 5 des Fahrzeugs angeordnet, wobei das externe Dämpfungsmittel 8 speziell zwischen dem Fixiermittel 4 und der Aufhängung 5 des Fahrzeugs angeordnet ist. Das gezeigte externe Dämpfungsmittel 4 ist Elastomerelement. Auf diese Weise werden Vibrationen, die gegebenenfalls trotz interner Dämpfungsmittel von dem Kompressor auf das Gehäuse übertragen werden, zusätzlich absorbiert, weil der direkte Kraftpfad vom Gehäuse auf das Fahrgestell durch das externe Dämpfungsmittel unterbrochen wird.

Denkbar ist eine Kombination verschiedener interner oder externer Dämpfungsmittel 7, 8. Dabei kann das interne Dämpfungsmittel 7 beispielsweise zur akustischen Dämpfung des elektrischen Kompressors dienen, während das externe Dämpfungsmittel 8 zur Dämpfung der Vibration des elektrischen Kompressors und/oder zur Unterbrechung des Kraftpads des elektrischen Kompressors zur Aufhängung des Fahrzeugs ausgebildet ist. Auf diese Weise kann gewährleistet werden, dass sowohl die im Fahrgastraum ankommenden Geräusche des Kompressors als auch die im Fahrgastraum ankommenden Schwingungen des Kompressors auf ein Minimum reduziert werden.

Die verwendeten Dämpfungsmittel 7,8 sollten zumindest ein absorbierendes Material umfassen.

Bevorzugte Materiealien sollten insbesondere schallabsorbierend und/oder kraftabsorbierend und/oder vibrationsabsorbierend sein. Erfindungsgemäße Materialien sind Elastomere wie z.B Gummi, textile Stoffe wie z.B Vliesstoffe, Schaumstoffe wie z.B. PU-Schaum oder eine Mischung der vorgenannten. Vor allem die als absorbierende Pads ausgebildete internen Dämpfungsmittel 7 gemäß Fig. 1 und Fig. 2a-e sowie die externen Dämpfungsmittel 8 sind vorzugsweise aus Gummi hergestellt.

Die Halterung 1 umfasst zudem ein Gehäuse 2 aus Kunststoff. Dabei das Gehäuse 2 ist dabei vorzugsweise aus einem faserverstärkten Kunststoff hergestellt, um die die Kräfte auszuhalten, die durch das Aufnehmen und Halten des elektrischen Kompressors auf die Halterung 1 wirken können. Gleichzeitig weist das aus einem Kunststoffmaterial hergestellte Gehäuse 2 ein niedriges Eigengewicht auf.

Wie in Fig. 1 gezeigt ist, bildet das Gehäuse 2 für den elektrischen Kompressor eine nahezu vollständige Ummantelung, wenn der elektrische Kompressor in der Aufnahme 3 des Gehäuses 2 aufgenommen ist. Dadurch wir der Kompressor im Wesentlichen in alle drei Raumrichtungen abgeschirmt, was dazu führt, dass beim Betrieb des Kompressors entstehende Schallwellen durch das Gehäuse 2 mit dem Dämpfungsmechanismus 6 effizient absorbiert werden können. Dabei ist vorzugsweise vorgesehen, dass das Gehäuse 2 den elektrischen Kompressor derart umschließt, dass es im Wesentlichem über 80 % der Oberfläche des elektrischen Kompressors verdeckt, wenn der elektrische Kompressor in der Aufnahme 3 des Gehäuses 2 aufgenommen ist. Gemäß dem in Fig. 1 gezeigten Beispiel ist vorgesehen, dass lediglich ein kleiner Abschnitt des Kompressors "frei" bleibt, d.h. nicht vom Gehäuse 2 der Halterung 1 umschlossen wird. Dieser Abschnitt kann zum Beispiel für Anschlüsse zu anderen mechanischen oder elektrischen Fahrzeugteilen nötig sein (wie bspw. Ein-/Ausgänge für Kabel, Schläuche o.ä.).

Es ist außerdem von Vorteil, wenn das Gehäuse 2 möglichst eng an der Oberfläche des Kompressors anliegt, d.h. wenn der Kompressor kraft- und/oder formschlüssig in der Aufnahme 5 der Halterung angeordnet ist. Auf diese Weise kann das Gehäuse 2 der Halterung 1 selbst als tragendes Bauteil wirken, welches den elektrischen Kompressor stabil und zuverlässig mit dem Fahrzeug verbindet.

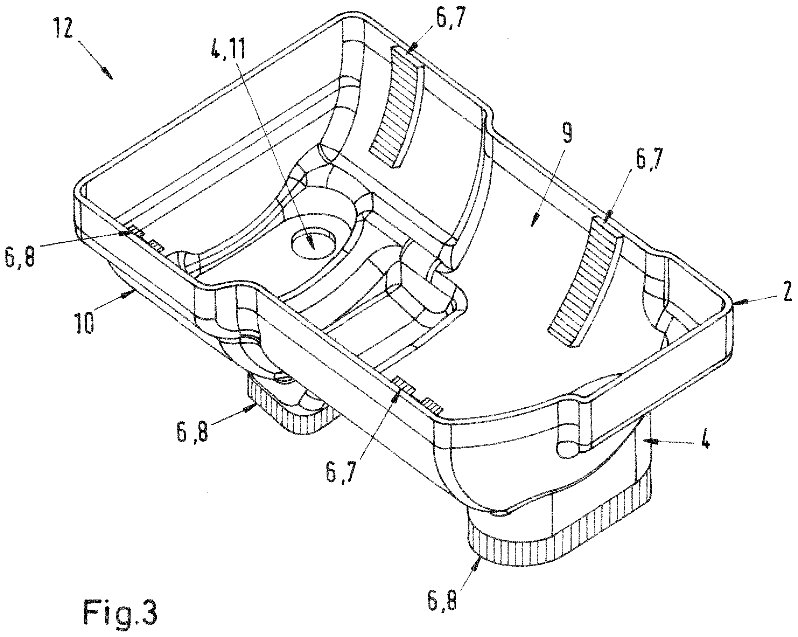

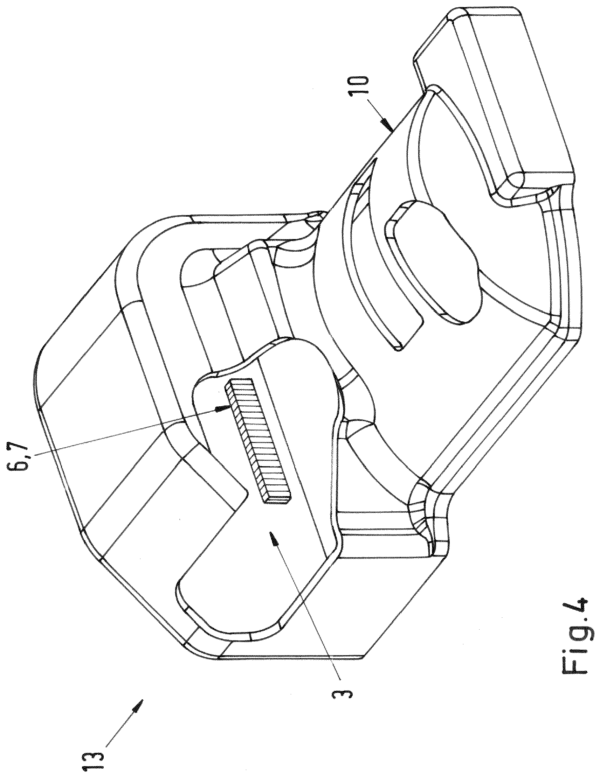

Wie in Fig. 3 und Fig. 4 gezeigt ist, kann das Gehäuse 2 mindestens zwei Gehäusesegmente 12,13 umfassen. Dabei ist insbesondere vorgesehen, dass das Gehäuse 2 genau zwei Gehäusesegmente 12,13 umfasst, nämlich ein erstes Gehäusesegment 12 und ein zweites Gehäusesegment 13. Eine solche Ausgestaltung ermöglicht es, mit nur wenigen Bauteilen eine möglichst große Ummantelung des elektrischen Kompressors zu erreichen. Das erste Gehäusesegment 12 und das zweite Gehäusesegment 13 können derart miteinander verbunden sein, dass sie die Aufnahme des Gehäuses 2 ausbilden. Die beiden Gehäusesegmente 12,13 können vorzugsweise kraft- oder stoffschlüssig verbunden sein und damit den Kompressor stabil in der Aufnahme 3 fixieren, wenn der Kompressor in der Halterung 1 aufgenommen ist.

Die Erfindung ist nicht auf eine der vorbeschriebenen Ausführungsformen beschränkt, sondern in vielfältiger Weise im Rahmen des Schutzumfanges der Ansprüche abwandelbar.

### Bezugszeichenliste

- 1: Halterung
- 2: Gehäuse
- 3: Aufnahme
- 4: Fixiermittel
- 5: Aufhängung
- 6: Dämpfungsmechanismus
- 7: Internes Dämpfungsmittel
- 8: Externes Dämpfungsmittel
- 9: Innenseite
- 10: Außenseite
- 11: Ausnehmung
- 12: Erstes Gehäusesegment
- 13: Zweites Gehäusesegment

## Patentansprüche

1. Halterung (1) zum Fixieren eines elektrischen Kompressors in einem Fahrzeug, umfassend ein Gehäuse (2) mit einer Aufnahme (3), wobei das Gehäuse (2) dazu ausgebildet ist, den elektrischen Kompressor in der Aufnahme (3) aufzunehmen, wobei das Gehäuse (2) ein Fixiermittel (4) zur Fixierung des elektrischen Kompressors an einer Aufhängung (5) des Fahrzeugs aufweist, wobei die Halterung (1) mindestens einen Dämpfungsmechanismus (6) umfasst, und wobei der Dämpfungsmechanismus (6) mindestens ein internes Dämpfungsmittel (7) und mindestens ein externes Dämpfungsmittel (8) umfasst und ein absorbierendes Material umfasst, wobei das mindestens eine absorbierende Material ein Elastomer, ein textiler Stoff, ein Schaum oder eine Mischung der vorgenannten ist, **dadurch gekennzeichnet, dass** das Gehäuse (2) aus einem Kunststoff hergestellt ist.

2. Halterung (1) nach Anspruch 1, **dadurch gekennzeichnet, dass** der Dämpfungsmechanismus (6) zur akustischen Dämpfung des elektrischen Kompressors und/oder zur Dämpfung der Vibration des elektrischen Kompressors und/oder zur Dämpfung des Kraftpads des elektrischen Kompressors zur Aufhängung (5) des Fahrzeugs ausgebildet ist.

3. Halterung (1) nach einem der vorhergehenden Ansprüche, **dadurch gekennzeichnet, dass** das mindestens eine interne Dämpfungsmittel (7) zumindest abschnittsweise an einer Innenseite (9) des Gehäuses (2) in der Aufnahme (3) angeordnet ist, wobei das interne Dämpfungsmittel (6) insbesondere eine Verkleidung der Innenseite (9) ist.

4. Halterung (1) nach einem der vorhergehenden Ansprüche, **dadurch gekennzeichnet, dass** das externe Dämpfungsmittel (8) an einer Außenseite (10) der Aufnahme (3) des Gehäuses (2) angeordnet ist, wobei das externe Dämpfungsmittel (8) bei bestimmungsgemäßem Gebrauch der Halterung (1) zwischen dem Gehäuse (2) und der Aufhängung (5) des Fahrzeugs angeordnet ist, wobei das externe Dämpfungsmittel (8) bei bestimmungsgemäßem Gebrauch der Halterung (1) insbesondere zwischen dem Fixiermittel (4) und der Aufhängung (5) des Fahrzeugs angeordnet ist.

5. Halterung (1) nach einem der vorhergehenden Ansprüche, **dadurch gekennzeichnet, dass** das absorbierende Material schallabsorbierend und/oder kraftabsorbierend und/oder vibrationsabsorbierend ist.

6. Halterung (1) nach einem der vorhergehenden Ansprüche, **dadurch gekennzeichnet, dass** das Elastomer ein Gummi ist.

7. Halterung (1) nach einem der vorhergehenden Ansprüche, **dadurch gekennzeichnet, dass** der textile Stoff ein Vliesstoff ist.

8. Halterung (1) nach einem der vorhergehenden Ansprüche, **dadurch gekennzeichnet, dass** der Schaum ein Polyurethan-Schaum ist.

9. Halterung (1) nach einem der vorhergehenden Ansprüche, **dadurch gekennzeichnet, dass** die Halterung (1) derart ausgestaltet ist, dass der elektrische Kompressor ausschließlich über die Halterung (1) an der Aufhängung (5) des Fahrzeugs fixierbar ist.

10. Halterung (1) nach einem der vorhergehenden Ansprüche, **dadurch gekennzeichnet, dass** das Gehäuse (2) den elektrischen Kompressor zumindest teilweise umschließt, wenn der elektrische Kompressor in der Aufnahme (3) des Gehäuses (2) aufgenommen ist.

11. Halterung (1) nach einem der vorhergehenden Ansprüche, **dadurch gekennzeichnet, dass** das Gehäuse (2) den elektrischen Kompressor derart umschließt, dass das Gehäuse (2) im Wesentlichem mindestens 60 % einer Oberfläche des elektrischen Kompressors verdeckt, wenn der elektrische Kompressor in der Aufnahme (3) des Gehäuses (2) aufgenommen ist.

12. Halterung (1) nach einem der vorhergehenden Ansprüche, **dadurch gekennzeichnet, dass** das Gehäuse (2) mindestens zwei Gehäusesegmente umfasst

13. Halterung (1) nach einem der vorhergehenden Ansprüche, **dadurch gekennzeichnet, dass** das Gehäuse (2) ein erstes Gehäusesegment und ein zweites Gehäusesegment umfasst, wobei das erste Gehäusesegment und das zweite Gehäusesegment derart miteinander verbunden sind, dass sie die Aufnahme (3) des Gehäuses (2) ausbilden.

## Claims

1. A mounting (1) for fixing an electric compressor in a vehicle, comprising a housing (2) with a receptacle (3), wherein the housing (2) is configured to accommodate the electric compressor in the receptacle (3), wherein the housing (2) comprises a fixing means (4) for fixing the electric compressor to a suspension (5) of the vehicle, wherein the mounting (1) comprises at least one damping mechanism (6), and wherein the damping mechanism (6) comprises at least one internal damping means (7) and at least one external damping means (8) and comprises an absorbent material, wherein the at least one absorbent material is an elastomer, a textile fabric, a foam or a mixture of the aforementioned, **characterised in that** the housing (2) is made of a plastic.

2. Mounting (1) according to claim 1, **characterised in that** the damping mechanism (6) is designed for acoustic damping of the electric compressor and/or for damping of the vibration of the electric compressor and/or for damping of the force pad of the electric compressor relative to the suspension (5) of the vehicle.

3. Mounting (1) according to one of the preceding claims, **characterised in that** the at least one internal damping means (7) is arranged at least in sections on an inner surface (9) of the housing (2) within the receptacle (3), wherein the internal damping mechanism (6) is, in particular, a lining of the inner surface (9).

4. Mounting (1) according to one of the preceding claims, **characterised in that** the external damping means (8) is arranged on an outer surface (10) of the receptacle (3) of the housing (2), wherein, during intended use of the mounting (1), the external damping means (8) is arranged between the housing (2) and the vehicle's suspension (5), wherein, during intended use of the mounting (1), the external damping means (8) is arranged in particular between the fixing means (4) and the vehicle's suspension (5).

5. Mounting (1) according to one of the preceding claims, **characterised in that** the absorbent material is sound-absorbing and/or force-absorbing and/or vibration-absorbing.

6. Mounting (1) according to one of the preceding claims, **characterised in that** the elastomer is a rubber.

7. Mounting (1) according to one of the preceding claims, **characterised in that** the textile fabric is a non-woven fabric.

8. Mounting (1) according to one of the preceding claims, **characterised in that** the foam is a polyurethane foam.

9. Mounting (1) according to one of the preceding claims, **characterised in that** the mounting (1) is designed such that the electric compressor can be fixed to the vehicle's suspension (5) exclusively via the mounting (1).

10. Mounting (1) according to one of the preceding claims, **characterised in that** the housing (2) at least partially encloses the electric compressor when the electric compressor is received in the receptacle (3) of the housing (2).

11. Mounting (1) according to any of the preceding claims, **characterised in that** the housing (2) encloses the electric compressor such that the housing (2) essentially covers at least 60% of a surface of the electric compressor when the electric compressor is received in the receptacle (3) of the housing (2).

12. Mounting (1) according to one of the preceding claims, **characterised in that** the housing (2) comprises at least two housing segments.

13. Mounting (1) according to one of the preceding claims, **characterised in that** the housing (2) comprises a first housing segment and a second housing segment, wherein the first housing segment and the second housing segment are connected to one another in such a way that they form the receptacle (3) of the housing (2).

## Revendications

1. Support (1) permettant de fixer un compresseur électrique dans un véhicule, comprenant un boîtier (2) muni d'un logement (3), le boîtier (2) étant conçu pour recevoir le compresseur électrique dans le logement (3), le boîtier (2) comportant un moyen de fixation (4) destiné à fixer le compresseur électrique à une suspension (5) du véhicule, le support (1) comprenant au moins un mécanisme d'amortissement (6), et dans lequel le mécanisme d'amortissement (6) comprend au moins un moyen d'amortissement interne (7) et au moins un moyen d'amortissement externe (8) ainsi qu'un matériau absorbant, ledit au moins un matériau absorbant étant un élastomère, un tissu textile, une mousse ou un mélange des éléments précités, **caractérisé en ce que** le boîtier (2) est fabriqué en matière plastique.

2. Support (1) selon la revendication 1, **caractérisé en ce que** le mécanisme d'amortissement (6) est conçu pour l'amortissement acoustique du compresseur électrique et/ou pour l'amortissement des vibrations du compresseur électrique et/ou pour l'amortissement du patin de force du compresseur électrique par rapport à la suspension (5) du véhicule.

3. Support (1) selon l'une des revendications précédentes, **caractérisé en ce que** le au moins un moyen d'amortissement interne (7) est disposé, au moins par sections, sur une face intérieure (9) du boîtier (2) dans le logement (3), le moyen d'amortissement interne (6) étant en particulier un revêtement de la face intérieure (9).

4. Support (1) selon l'une des revendications précédentes, **caractérisé en ce que** le moyen d'amortissement externe (8) est disposé sur une face extérieure (10) du logement (3) du boîtier (2), le moyen d'amortissement externe (8) étant disposé, lors d'une utilisation conforme du support (1), entre le boîtier (2) et la suspension (5) du véhicule, le moyen d'amortissement externe (8) étant, lors d'une utilisation conforme du support (1), disposé en particulier entre le moyen de fixation (4) et la suspension (5) du véhicule.

5. Support (1) selon l'une des revendications précédentes, **caractérisé en ce que** le matériau absorbant est insonorisant et/ou amortisseur de forces et/ou amortisseur de vibrations.

6. Support (1) selon l'une des revendications précédentes, **caractérisé en ce que** l'élastomère est un caoutchouc.

7. Support (1) selon l'une des revendications précédentes, **caractérisé en ce que** le tissu textile est un non-tissé.

8. Support (1) selon l'une des revendications précédentes, **caractérisé en ce que** la mousse est une mousse de polyuréthane.

9. Support (1) selon l'une des revendications précédentes, **caractérisé en ce que** le support (1) est conçu de telle sorte que le compresseur électrique peut être fixé à la suspension (5) du véhicule exclusivement par l'intermédiaire du support (1).

10. Support (1) selon l'une des revendications précédentes, **caractérisé en ce que** le boîtier (2) entoure au moins partiellement le compresseur électrique lorsque celui-ci est logé dans le logement (3) du boîtier (2).

11. Support (1) selon l'une des revendications précédentes, **caractérisé en ce que** le boîtier (2) entoure le compresseur électrique de telle sorte que le boîtier (2) recouvre essentiellement au moins 60 % d'une surface du compresseur électrique lorsque le compresseur électrique est logé dans le logement (3) du boîtier (2).

12. Support (1) selon l'une des revendications précédentes, **caractérisé en ce que** le boîtier (2) comprend au moins deux segments de boîtier.

13. Support (1) selon l'une des revendications précédentes, **caractérisé en ce que** le boîtier (2) comprend un premier segment de boîtier et un deuxième segment de boîtier, le premier segment de boîtier et le deuxième segment de boîtier étant reliés l'un à l'autre de telle sorte qu'ils forment le logement (3) du boîtier (2).
